# EUROPÄISCHE PATENTSCHRIFT

(11) **EP 3 616 270 B1**
(45) Veröffentlichungstag und Bekanntmachung des Hinweises auf die Patenterteilung: **09.12.2020**
(21) Anmeldenummer: 18717068.3
(22) Anmeldetag: 16.04.2018
(51) Int. Cl.: H01R 13/66, H01R 24/76, H01R 13/11

(54) **STECKVERBINDERTEIL MIT EINER TEMPERATURÜBERWACHUNGSEINRICHTUNG**
PLUG CONNECTOR PART HAVING A TEMPERATURE-MONITORING DEVICE
ÉLÉMENT DE CONNEXION ENFICHABLE COMPORTANT UN DISPOSITIF DE SURVEILLANCE DE TEMPÉRATURE

(30) Priorität: 24.04.2017 BE 201705284
(43) Veröffentlichungstag der Anmeldung: 04.03.2020
(73) Patentinhaber: Phoenix Contact e-Mobility GmbH, 32816 Schieder-Schwalenberg (DE)
(72) Erfinder: ROSE, Markus, 33189 Schlangen (DE); SEELIG, Marco, 33818 Leopoldshöhe (DE); MOSEKE, Dirk, 37671 Höxter-Lüchtringen (DE); SANDER, Christian, 32694 Dörentrup (DE)
(74) Vertreter: Muth, Bruno
(86) Internationale Anmeldenummer: PCT/EP2018/059643
(87) Internationale Veröffentlichungsnummer: WO 2018/197247

(56) Entgegenhaltungen:
- WO-A1-2016/169940
- DE-T5-112014 003 014

## Beschreibung

Die Erfindung betrifft ein Steckverbinderteil zum Verbinden mit einem Gegensteckverbinderteil nach Anspruch 1.

Ein derartiges Steckverbinderteil umfasst ein Gehäuseteil, ein an dem Gehäuseteil angeordnetes, elektrisches Kontaktelement zum Herstellen eines elektrischen Kontakts mit dem Gegensteckverbinderteil und eine Temperaturüberwachungseinrichtung mit einer Sensoreinrichtung zum Detektieren einer Erwärmung an dem Kontaktelement.

Bei einem solchen Steckverbinderteil kann es sich um einen Stecker oder auch eine Buchse handeln. Ein solches Steckverbinderteil kann insbesondere an einer Ladeeinrichtung zum Übertragen eines Ladestroms zum Einsatz kommen. Das Steckverbinderteil kann insbesondere als Ladestecker oder Ladebuchse zum Laden eines elektromotorisch angetriebenen Kraftfahrzeugs (bezeichnet auch als Elektrofahrzeug) ausgebildet sein und kann auf Seiten einer Ladestation, z.B. als Ladestecker an einem Ladekabel, oder auch auf Seiten eines Fahrzeugs als sogenannter Inlet verwendet werden. Ladestecker oder Ladebuchsen zum Aufladen von Elektrofahrzeugen sind so auszulegen, dass große Ladeströme übertragen werden können. Weil die thermische Verlustleistung quadratisch mit dem Ladestrom wächst und zudem vorgeschrieben ist, dass eine Temperaturerhöhung an einem Steckverbinderteil 50 K nicht überschreiten darf, ist bei solchen Ladesteckern oder Ladebuchsen erforderlich, eine Temperaturüberwachung bereitzustellen, um eine Überhitzung an Bauteilen des Ladesteckers oder der Ladebuchse frühzeitig zu erkennen und gegebenenfalls eine Modifizierung des Ladestroms oder gar eine Abschaltung der Ladeeinrichtung zu bewirken.

Bei einem aus der EP 2 605 339 A1 bekannten Ladestecker ist ein Temperatursensor an einem Isolierkörper in etwa mittig zwischen Kontaktelementen des Kontaktsteckers angeordnet. Über den Temperatursensor kann erkannt werden, ob irgendwo an den Kontaktelementen es zu einer übermäßigen Erhitzung kommt, um gegebenenfalls ein Abschalten des Ladevorgangs zu bewirken.

Bei einem aus der GB 2 489 988 A bekannten Ladestecker sind mehrere Temperatursensoren vorgesehen, die über eine Leitung Temperaturdaten übermitteln. Abhängig davon, in welchem Temperaturbereich sich die an den Temperatursensoren aufgenommenen Temperaturen befinden, erfolgt eine Regelung eines Ladevorgangs.

Aus der US 6,210,036 B1 ist ein Steckverbinder bekannt, bei dem mehrere Temperatursensoren über eine einadrige Leitung miteinander seriell verkettet sind. Die Temperatursensoren sind an einem Isolierkörper angeordnet und weisen bei einer vorbestimmten Temperatur eine signifikante Widerstandsänderung auf, die so groß ist, dass ein an die Leitung angeschlossener Steuerkreis die Änderung erfassen und den Stromfluss durch den Ladestecker anpassen, gegebenenfalls abschalten kann.

Aus der US 8,325,454 B2 ist ein Stecker bekannt, bei dem einzelnen Kontakten Thermistoren zugeordnet sind, die parallel miteinander verschaltet sind und bei Überschreiten einer Schwelltemperatur einen Thyristor leitend schalten, um auf diese Weise einen Stromfluss durch die Kontakte abzuschalten.

Bei aus dem Stand der Technik bekannten Ladesteckern sind Temperatursensoren insbesondere in einen Isolierkörper eingebettet. Dies ist erforderlich, um die Temperatursensoren elektrisch von den Kontaktelementen, an denen es zu einer Erwärmung kommen kann, zu isolieren. Dies bringt aber gleichzeitig den Nachteil mit sich, dass eine Temperaturänderung an einem der Kontaktelemente über den Isolierkörper zeitlich verzögert übertragen wird und somit mit zeitlicher Verzögerung an den Temperatursensoren wahrgenommen wird. Insbesondere bei Konzepten, die eine Schnellabschaltung eines Lastkreises im Fehlerfall ermöglichen sollen, sind derartige Anordnungen von Temperatursensoren daher unter Umständen ungeeignet.

Es besteht ein Bedürfnis nach einer Temperaturüberwachungseinrichtung, die einfach und kostengünstig aufgebaut sein kann und eine Temperaturüberwachung an den Kontaktelementen mit einem schnellen Ansprechverhalten für ein zügiges Einleiten von Gegenmaßnahmen, beispielsweise eine Schnellabschaltung eines Ladestroms, ermöglicht.

Bei einem aus der DE 10 2015 106 251 A1 bekannten Steckverbinderteil sind Kontaktelemente in Öffnungen einer Leiterplatte angeordnet. An der Leiterplatte sind ein oder mehrere Sensoreinrichtungen vorgesehen, die dazu dienen, eine Erwärmung an einem oder mehreren Kontaktelementen zu erfassen.

Weiter ist aus der DE 11 2014 003014 T5 ein Anschluss bekannt, welcher einen Anschlusskörper aufweist, der ein Kontaktteil, mit welchem ein Gegenanschluss in Kontakt gebracht wird, und ein Sensor-Fixierungsteil aufweist. Ferner ist ein Temperaturfühler vorgesehen, der an dem Sensor-Fixierungsteil fixiert ist. Das Sensor-Fixierungsteil weist eine zylindrische Form auf, in welcher der Temperaturfühler eingeführt ist, wobei der Temperaturfühler ein Verriegelungsteil aufweist und ihm gestattet ist, in das Sensor-Fixierungsteil durch elastische Verformung des Sensor-Fixierungsteils eingeführt zu werden. In einer Einführungsanschlussposition ist das Verriegelungsteil an dem Sensor-Fixierungsteil verriegelt.

Aufgabe der vorliegenden Erfindung ist es, ein Steckverbinderteil bereitzustellen, das auf einfache und kostengünstige Weise eine Temperaturüberwachung mit schnellem Ansprechverhalten und einfachem Aufbau ermöglicht.

Diese Aufgabe wird durch einen Gegenstand mit den Merkmalen des Anspruchs 1 gelöst.

Demnach weist die Temperaturüberwachungseinrichtung ein flächig entlang einer Ebene erstrecktes Trägerelement auf, an dem die Sensoreinrichtung angeordnet ist und das zwei Clipsarme aufweist, über die das Trägerelement auf das Kontaktelement aufgeclipst ist.

Das Trägerelement kann beispielsweise als Leiterplatte ausgebildet sein, die z.B. auf einem aus einem elektrisch isolierenden Material bestehenden Trägerkörper elektrische Leiterbahnen trägt. Das Trägerelement kann alternativ aber auch durch eine sogenannte Metallkernleiterplatte verwirklicht sein.

Dadurch, dass das Trägerelement auf das Kontaktelement aufgeclipst ist, ergibt sich eine besonders einfache Montage der Temperaturüberwachungseinrichtung an einem zugeordneten Kontaktelement. Einem jeden Kontaktelement des Steckverbinderteils kann hierbei eine gesonderte Temperaturüberwachungseinrichtung zugeordnet sein, wobei zur Montage die Temperaturüberwachungseinrichtung über ihre Clipsarme auf das jeweils zugeordnete Kontaktelement aufgeclipst und dadurch an dem Kontaktelement befestigt wird.

Die Clipsarme sind vorzugsweise einstückig mit dem Trägerelement ausgebildet. Die Clipsarme sind somit an das Trägerelement angeformt und dabei hinreichend elastisch, sodass das Trägerelement auf das zugeordnete Kontaktelement aufgesteckt werden kann und in aufgesteckter Stellung an dem Kontaktelement gehalten ist.

Das Trägerelement ist beispielsweise symmetrisch ausgebildet, mit einer in der Ebene, entlang derer sich das Trägerelement erstreckt, gelegenen Symmetrieachse.

Die Clipsarme bilden vorzugsweise zwischen sich eine Öffnung aus, die einen Randbereich aufweist, der entlang eines Kreisbogens erstreckt ist und das Kontaktelement umgreift. Weil das Kontaktelement sich durch die zwischen den Clipsarmen gebildete Öffnung des Trägerelements hindurch erstreckt und in kontaktierender Anlage mit dem Randbereich der Öffnung ist, ist das Kontaktelement mit dem Trägerelement in flächiger Anlage und somit thermisch mit dem Trägerelement gekoppelt, sodass die an dem Trägerelement angeordnete Sensoreinrichtung eine Erwärmung an dem Kontaktelement detektieren kann.

Weil eine Sensoreinrichtung somit räumlich nahe an einem zugeordneten Kontaktelement angeordnet sein kann, kann die Sensoreinrichtung eine Erwärmung an dem Kontaktelement ohne große zeitliche Latenz, also mit zügigem Ansprechverhalten detektieren, sodass die Information über die Erwärmung zügig ausgewertet werden kann, um eine geeignete Gegenmaßnahme, beispielsweise eine Abschaltung eines übertragenen Ladestroms, einzuleiten.

Das Kontaktelement erstreckt sich vorteilhafterweise senkrecht durch die zwischen den Clipsarmen gebildete Öffnung des Trägerelements hindurch. Das Trägerelement erstreckt sich flächig in der ihm zugeordneten Ebene, während das Kontaktelement senkrecht zu dieser Ebene steht.

In einer vorteilhaften Ausgestaltung ist der Randbereich der Öffnung zumindest teilweise durch eine Metallisierungsschicht bedeckt. Der Randbereich ist somit mit einem (gut wärmeleitfähigen) Metallmaterial (z.B. Kupfer) metallisiert und ist über die Metallisierungsschicht mit dem Kontaktelement, an das das Trägerelement angesteckt ist, in flächiger Anlage, sodass die Temperaturüberwachungseinrichtung darüber thermisch mit dem Kontaktelement gekoppelt ist.

Die Sensoreinrichtung der Temperaturüberwachungseinrichtung ist vorzugsweise hinreichend weit von dem Kontaktelement entfernt an dem Trägerelement angeordnet, sodass die Sensoreinrichtung (unter Einhaltung der zur Isolation erforderlichen Luft- und Kriechstrecke) elektrisch von dem Kontaktelement isoliert ist. Um hierbei eine Detektion einer Erwärmung an dem Kontaktelement ohne wesentliche Verzögerung zu ermöglichen, weist das Trägerelement vorzugsweise eine mit der Metallisierungsschicht am Randbereich kontaktierte, wärmeleitende (Metall-)Schicht auf, zum Beispiel eine Kupferschicht. Die wärmeleitende Schicht kann beispielsweise in den Grundkörper eingebettet sein und sich bis hin zu der Sensoreinrichtung, vorzugsweise bis unter die Sensoreinrichtung, innerhalb des Trägerelements erstrecken. Bei einer Erwärmung des Kontaktelements erwärmt sich aufgrund der Anlage des Kontaktelements an der Metallisierungsschicht am Randbereich und der Verbindung der wärmeleitenden Schicht mit der Metallisierungsschicht auch die wärmeleitende Schicht. Dadurch, dass die Sensoreinrichtung in unmittelbarer räumlicher Nähe zu der wärmeleitenden Schicht angeordnet sein kann - bei elektrischer Isolierung über den Grundkörper -, kann die Sensoreinrichtung eine Erwärmung der wärmeleitende Schicht unmittelbar erfassen und somit eine Erwärmung an dem Kontaktelement detektieren.

In einer Ausgestaltung ist eine erste wärmleitende Schicht an einer Oberfläche des Grundkörpers angeordnet, und eine zweite wärmeleitende Schicht ist in den Grundkörper eingebettet. Die erste wärmeleitende Schicht und die zweite wärmeleitende Schicht, die jeweils vorzugsweise aus einem gut wärmeleitfähigen Metallmaterial, zum Beispiel Kupfer, gebildet sind, sind vorzugsweise über sogenannte Wärmevias thermisch miteinander verbunden, sodass eine thermische Kopplung zwischen den wärmeleitenden Schichten besteht und sich die wärmeleitenden Schichten, die jeweils mit der Metallisierungsschicht am Randbereich der Öffnung kontaktiert sind, somit gleichförmig erwärmen.

Während die erste wärmeleitende Schicht an der Oberfläche des Trägerelements, auf der auch die Sensoreinrichtung angeordnet ist, um einen Abstand zu der Sensoreinrichtung beabstandet und darüber elektrisch zu der Sensoreinrichtung isoliert ist, erstreckt sich die zweite wärmeleitende Schicht innerhalb des Grundkörpers vorzugsweise bis unter die Sensoreinrichtung und ist über den Grundkörper zu der Sensoreinrichtung elektrisch isoliert. Über die zweite wärmeleitende Schicht wird Wärme somit hin zu der Sensoreinrichtung geleitet und kann an der Sensoreinrichtung detektiert werden.

Ein Trägerelement mit unterschiedlichen, wärmeleitenden (Metall-)Schichten ist beispielsweise durch eine Leiterplatte verwirklicht, bei der der Grundkörper aus einem isolierenden Material, zum Beispiel FR4, gefertigt ist.

In alternativer Ausgestaltung kann das Trägerelement durch eine sogenannte Metallkernleiterplatte verwirklicht sein, die einen Metallkern, zum Beispiel aus Aluminium, und zumindest eine den Metallkern ganz oder teilweise überdeckende, elektrisch isolierende Schicht aufweist. Der Metallkern der Metallkernleiterplatte ist in diesem Fall elektrisch und thermisch mit dem Kontaktelement, an das die Temperaturüberwachungseinrichtung angesetzt ist, kontaktiert. Die Sensoreinrichtung ist über eine isolierende Schicht elektrisch zu dem Metallkern isoliert, dabei aber in enger räumlicher Lagebeziehung zu dem Metallkern angeordnet, sodass eine Erwärmung an dem Kontaktelement durch Wärmeleitung über den Metallkern hin zu der Sensoreinrichtung übertragen wird und an der Sensoreinrichtung detektiert werden kann.

Eine Bauform einer Metallkernleiterplatte ist beispielsweise aus der DE 39 35 680 A1 bekannt.

Die Clipsarme, über die die Temperaturüberwachungseinrichtung an das zugeordnete Kontaktelement angesetzt ist, sind derart hinreichend elastisch, dass die Temperaturüberwachungseinrichtung an das zugeordnete Kontaktelement angeclipst werden kann, bei zuverlässigem Halt in angesteckter Stellung. Um die Elastizität an den Clipsarmen zu verbessern und insbesondere eine Bruchgefahr an den Clipsarmen bei wiederholtem Stecken zu reduzieren, kann an dem Trägerelement zumindest eine Entlastungsaussparung vorgesehen sein, die das Trägerelement örtlich schwächt, sodass die Clipsarme in hinreichendem Maße elastisch verformt und die zwischen den Clipsarmen gebildete Öffnung beim Aufstecken elastisch geweitet werden kann.

Die Entlastungsaussparung kann beispielsweise innerhalb des Trägerelements gebildet sein. Die Entlastungsaussparung kann aber auch von der zwischen den Clipsarmen gebildeten Öffnung ausgehen und sich ausgehend von der Öffnung in das Trägerelement hinein erstrecken. Die Entlastungsaussparung kann beispielsweise durch Fräsen gefertigt sein und erstreckt sich senkrecht zu der Ebene, entlang derer sich das Trägerelement erstreckt, durch das Trägerelement hindurch.

In einer Ausgestaltung weist das Steckverbinderteil einen Kontaktträger auf, an dem ein oder mehrere Kontaktelemente gehalten sind und der an dem Gehäuseteil befestigt ist. Über den Kontaktträger mit den daran angeordneten Kontaktelementen wird eine vormontierte Baugruppe geschaffen, die an dem Gehäuseteil des Steckverbinderteils angeordnet und befestigt werden kann. An zumindest einem Kontaktelement - vorzugsweise solchen Kontaktelementen, die als Leistungskontakte zum Übertragen großer (Lade-)Ströme dienen - ist hierbei eine Temperaturüberwachungseinrichtung angeordnet und darüber an dem Kontaktträger gehalten.

Vorzugsweise ist die Temperaturüberwachungseinrichtung über die Clipsarme des Trägerelements an das zugeordnete Kontaktelement angeclipst, dabei aber nicht zusätzlich fest mit dem Kontaktträger oder dem Gehäuseteil verbunden. Die Temperaturüberwachungseinrichtung ist somit nur an dem Kontaktelement festgelegt, nicht aber an dem Kontaktträger und dem Gehäuseteil, sodass eine Kraftwirkung auf das Kontaktelement zum Beispiel beim steckenden Verbinden des Steckverbinderteils mit einem zugeordneten Gegensteckverbinderteil nicht zu einer Belastung an der Temperaturüberwachungseinrichtung führt und insbesondere keine (nennenswerten) Kräfte zwischen dem Kontaktelement und dem Kontaktträger oder dem Gehäuseteil über das Trägerelement der Temperaturüberwachungseinrichtung übertragen werden.

Um hierbei insbesondere auch bei Erwärmung an dem Kontaktelement und damit einhergehend an dem Trägerelement der Temperaturüberwachungseinrichtung einen sicheren Halt der Temperaturüberwachungseinrichtung an dem zugeordneten Kontaktelement zu gewährleisten, kann das Trägerelement der Temperaturüberwachungseinrichtung beispielsweise über ein Federelement elastisch gegenüber dem Kontaktträger abgestützt sein. Das Trägerelement ist somit nicht ortsfest an dem Kontaktträger festgelegt, aber elastisch zu dem Kontaktträger abgestützt und darüber derart vorgespannt, dass das Trägerelement in Anlage mit dem Kontaktelement gedrückt wird. Kommt es z.B. aufgrund einer Erwärmung an dem Kontaktelement und an dem Trägerelement zu einer (geringfügigen) Verformung des Trägerelements, so wird das Trägerelement über das vorspannende Federelement in Anlage mit dem zugeordneten Kontaktelement gedrückt und steht somit in vorteilhaftem Kontakt mit dem Kontaktelement, sodass eine thermische Kopplung zwischen dem Kontaktelement und dem Trägerelement und zudem auch ein mechanischer Halt des Trägerelements an dem Kontaktelement gewährleistet ist.

In einer Ausgestaltung ist das Federelement als Schenkelfeder ausgebildet und mit einem ersten Schenkel an dem Trägerelement und mit einem zweiten Schenkel an dem Kontaktträger abgestützt. Das Federelement bewirkt über seine Federschenkel eine vorspannende Federkraft zwischen dem Kontaktträger und dem Trägerelement in Richtung des Kontaktelements, vorzugsweise in der Ebene, in der sich das Trägerelement flächig erstreckt.

Das Steckverbinderteil kann beispielsweise als Ladestecker oder als Ladebuchse eines Ladesystems zum Aufladen eines Elektrofahrzeugs Verwendung finden. Das Steckverbinderteil weist hierzu Kontaktelemente auf, die als Lastkontakte zum Übertragen eines Ladestroms zum Beispiel in Form eines Gleichstroms oder in Form eines Wechselstroms dienen. Temperaturüberwachungseinrichtungen sind hierbei vorzugsweise an diesen Lastkontakten angeordnet, wobei in einer vorteilhaften Ausgestaltung jedem Kontaktelement eine eigene Temperaturüberwachungseinrichtung zugeordnet ist. Die Sensoreinrichtung einer jeden Temperaturüberwachungseinrichtung ist beispielsweise an eine Steuereinrichtung angeschlossen, sodass über die Temperaturüberwachungseinrichtung aufgenommene Signale ausgewertet und zum Steuern eines über die Lastkontakte übertragenen Ladestroms verwendet werden können.

Sensoreinrichtungen der hier beschriebenen Art können z.B. als Temperatursensoren beispielsweise in Form von temperaturabhängigen Widerständen ausgebildet sein. Bei solchen Temperatursensoren kann es sich beispielsweise um Widerstände mit einem positiven Temperaturkoeffizienten (sogenannte PTC-Widerstände) handeln, deren Widerstandswert mit steigender Temperatur ansteigt (auch bezeichnet als Kaltleiter, die bei niedriger Temperatur eine gute elektrische Leitfähigkeit und bei höheren Temperaturen eine reduzierte elektrische Leitfähigkeit aufweisen). Solche Temperatursensoren können beispielsweise auch eine nichtlineare Temperaturkennlinie aufweisen und können beispielsweise aus einem Keramikmaterial hergestellt sein (sogenannte Keramik-Kaltleiter).

Es können beispielsweise aber auch elektrische Widerstände mit negativem Temperaturkoeffizienten (sogenannte NTC-Widerstände) als Temperatursensoren zum Einsatz kommen, deren Widerstandswert mit steigender Temperatur sinkt.

Alternativ oder zusätzlich können auch durch Halbleiterbauelemente ausgebildete Temperatursensoren zum Einsatz kommen.

Der der Erfindung zugrunde liegende Gedanke soll nachfolgend anhand der in den Figuren dargestellten Ausführungsbeispiele näher erläutert werden. Es zeigen:
- Fig.1: eine schematische Darstellung eines Elektrofahrzeugs mit einem Ladekabel und einer Ladestation zum Aufladen;
- Fig. 2: eine Ansicht eines Steckverbinderteils in Form eines Inlets auf Seiten eines Fahrzeugs;
- Fig. 3: eine Ansicht einer Baugruppe des Steckverbinderteils, aufweisend einen Kontaktträger mit daran angeordneten Kontaktelementen;
- Fig. 4: eine Frontalansicht der Baugruppe gemäß Fig. 3;
- Fig. 5: eine Seitenansicht der Baugruppe;
- Fig. 6: eine Draufsicht auf die Baugruppe;
- Fig. 7A: eine Ansicht der Baugruppe, vor Ansetzen der Kontaktelemente an den Kontaktträger;
- Fig. 7B: eine Ansicht der Baugruppe, bei an den Kontaktträger angesetzten Federelementen;
- Fig. 7C: eine Ansicht der Baugruppe, bei an den Kontaktträger angeordneten Kontaktelementen;
- Fig. 8: eine gesonderte Ansicht eines Kontaktelements mit einer zugeordneten Temperaturüberwachungseinrichtung;
- Fig. 9: eine Frontalansicht des Kontaktelements bei angesetzter Temperaturüberwachungseinrichtung;
- Fig. 10: eine perspektivische Ansicht der Anordnung gemäß Fig. 9;
- Fig. 11: eine Ansicht einer Temperaturüberwachungseinrichtung, mit einer auf einer Oberfläche eines Trägerelements angeordneten, ersten wärmeleitenden Schicht;
- Fig. 12: eine Ansicht einer in einem Grundkörper des Trägerelements der Temperaturüberwachungseinrichtung eingebetteten, zweiten wärmeleitenden Schicht;
- Fig. 13: eine schematische Schnittansicht entlang der Linie I-I gemäß Fig. 11;
- Fig. 14: eine Ansicht eines anderen Ausführungsbeispiels zweier Temperaturüberwachungseinrichtungen;
- Fig. 15: eine Ansicht eines wiederum anderen Ausführungsbeispiels einer Temperaturüberwachungseinrichtung, mit einem aus einer Metallkernleiterplatte gefertigten Trägerelement; und
- Fig. 16: eine schematische Ansicht des Aufbaus einer Metallkernleiterplatte.

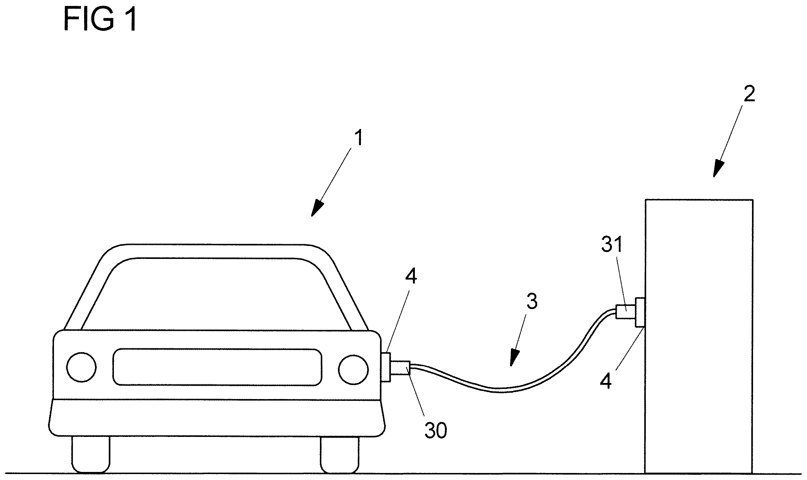

Fig. 1 zeigt in einer schematischen Ansicht ein Fahrzeug 1 in Form eines elektromotorisch angetriebenen Fahrzeugs (bezeichnet auch als Elektrofahrzeug). Das Elektrofahrzeug 1 verfügt über elektrisch aufladbare Batterien, über die ein Elektromotor zum Fortbewegen des Fahrzeugs 1 elektrisch versorgt werden kann.

Um die Batterien des Fahrzeugs 1 aufzuladen, kann das Fahrzeug 1 über ein Ladekabel 3 an eine Ladestation 2 angeschlossen werden. Das Ladekabel 3 kann hierzu mit einem Ladestecker 30 an einem Ende in ein zugeordnetes Gegensteckverbinderteil 4 in Form einer Ladebuchse des Fahrzeugs 1 eingesteckt werden und steht an seinem anderen Ende über einen anderen Ladestecker 31 mit einem Steckverbinderteil 4 in Form einer Ladebuchse an der Ladestation 2 in elektrischer Verbindung. Über das Ladekabel 3 werden Ladeströme mit vergleichsweise großer Stromstärke hin zum Fahrzeug 1 übertragen.

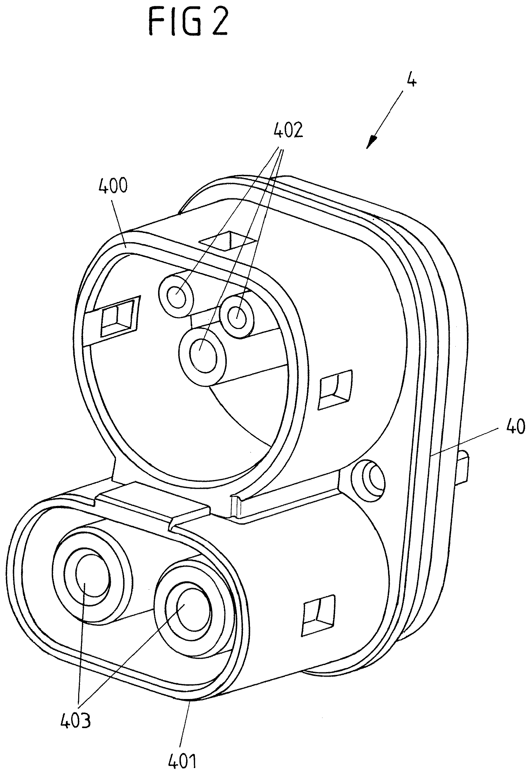

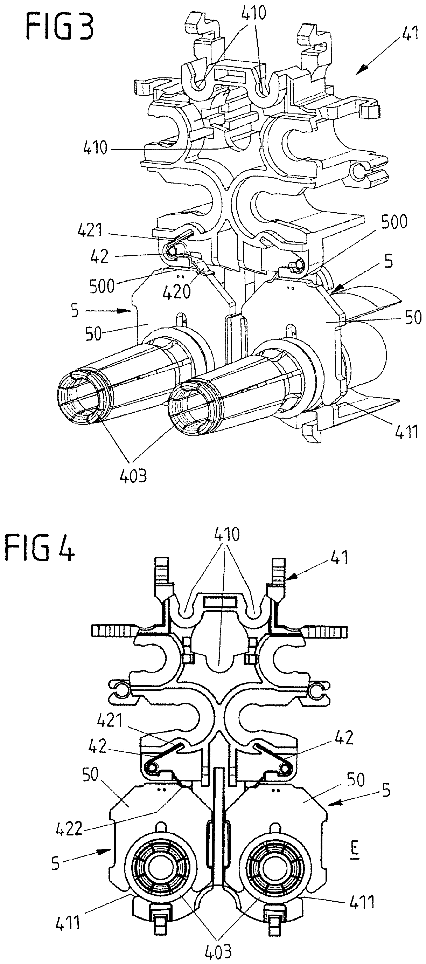

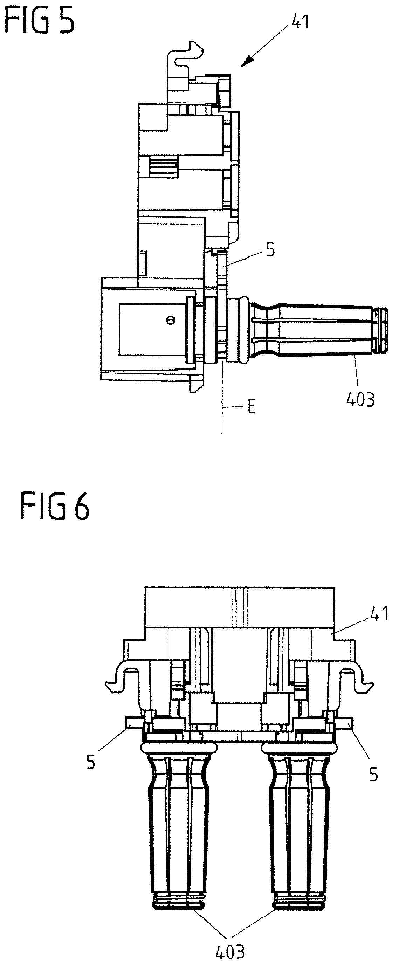

Bei einem in Fig. 2 in einer Gesamtschau dargestellten Steckverbinderteil 4 in Form eines Fahrzeuginlets ist ein in Fig. 3 bis 6 dargestellter Kontaktträger 41 an einem Gehäuseteil 40 angeordnet. Das Gehäuseteil 40 weist Steckabschnitte 400, 401, die steckend mit einem zugeordneten Gegensteckverbinderteil, beispielsweise einem Ladestecker, in Eingriff gebracht werden können.

Die Steckabschnitte 400, 401 weisen eine Anzahl von axial erstreckten, eine Einsteckrichtung definierenden Kontaktelementen 402, 403 auf. Durch steckendes Inverbindungbringen mit dem zugeordneten Gegensteckverbinderteil werden die Kontaktelemente 402, 403 elektrisch mit zugeordneten Gegenkontaktelementen des Gegensteckverbinderteils kontaktiert, sodass eine elektrische Kontaktierung zwischen dem Steckverbinderteil 4 und dem Gegensteckverbinderteil hergestellt wird und beispielsweise Ladeströme für einen Ladevorgang übertragen werden können.

Der in Fig. 3 bis 6 dargestellte Kontaktträger 41 weist Befestigungsstellen 410, 411 auf, an denen die Kontaktelemente 402, 403 zu befestigen sind und, bei an das Gehäuseteil 40 angesetztem Kontaktträger 41, relativ zu den Steckabschnitten 400, 401 gehalten sind. An oberen Befestigungsstellen 410 sind hierbei die dem oberen Steckabschnitt 400 zugeordneten Kontaktelemente 402, die einen Erdungskontakt und Signalkontakte verwirklichen, anzuordnen. An unteren Befestigungsstellen 411 sind demgegenüber die dem unteren Steckabschnitt 401 zugeordneten Kontaktelement 403 befestigt, die als Lastkontakte zum Übertragen eines Ladestroms in Form eines Gleichstrom dienen.

Mit dem Kontaktträger 41 wird eine vormontierte Baugruppe geschaffen, über die die Kontaktelemente 402, 403 zusammengefasst sind und die als Kontakteinsatz an dem Gehäuseteil 40 des Steckverbinderteils 4 befestigt werden kann.

Den als Lastkontakte dienenden Kontaktelementen 403 ist jeweils eine Temperaturüberwachungseinrichtung 5 zugeordnet, die zur Detektion einer Erwärmung an dem zugeordneten Kontaktelement 403 dient und dazu an das Kontaktelement 403 angesetzt ist. Die Temperaturüberwachungseinrichtung 5 weist ein Trägerelement 50 in Form einer flächig entlang einer Ebene E erstreckten Leiterplatte auf, an der eine Sensoreinrichtung angeordnet ist und die mechanisch an dem zugeordneten Kontaktelement 403 gehalten ist.

Einem jeden Kontaktelement 403 ist bei dem dargestellten Ausführungsbeispiel eine eigene Temperaturüberwachungseinrichtung 5 zugeordnet. Die Temperaturüberwachungseinrichtung 5 ist mit ihrem Trägerelement 50 an dem zugeordneten Kontaktelement 403 festgelegt, jedoch nicht - mit Ausnahme einer elastischen Vorspannung über ein Federelement 42 - an dem Kontaktträger 41 und auch nicht an dem Gehäuseteil 40, sodass die Temperaturüberwachungseinrichtung 5 nicht in einem Kraftübertragungsstrang zwischen dem Kontaktelement 403 und dem Kontaktträger 41 und dem Gehäuseteil 40 ist und somit an dem Kontaktelement 403 oder dem Gehäuseteil 40 wirkende Belastungskräfte nicht zu einer (nennenswerten) Belastung an der Temperaturüberwachungseinrichtung 5 führen.

Eine jede Temperaturüberwachungseinrichtung 5 ist über ein Federelement 42 elastisch gegenüber dem Kontaktträger 41 abgestützt und über das Federelement 42 innerhalb der Ebene E in Richtung des jeweils zugeordneten Kontaktelements 403 gedrückt. Über das Federelement 42 wird somit eine elastische Vorspannung auf das Trägerelement 50 der Temperaturüberwachungseinrichtung 5 bewirkt, die einen mechanisch sicheren Halt der Temperaturüberwachungseinrichtung 5 an dem zugeordneten Kontaktelement 403 bei günstiger thermischer Kopplung bewirkt.

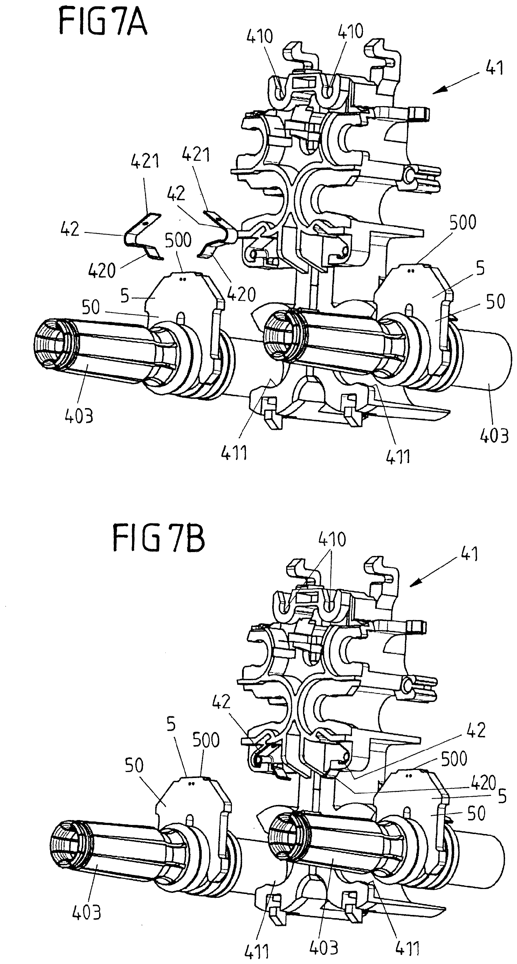

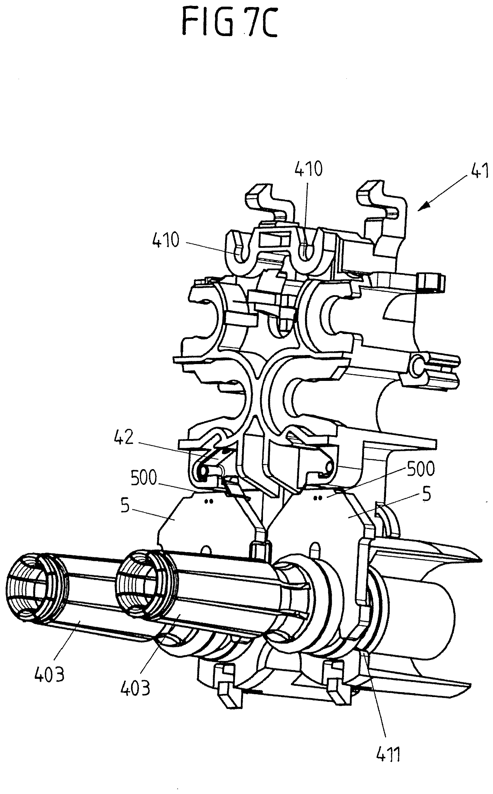

Zur Montage der Kontaktelemente 403 an dem Kontaktträger 41 werden, wie in der Abfolge von Fig. 7A bis 7C dargestellt, zunächst die Temperaturüberwachungseinrichtungen 5 an die Kontaktelemente 403 angesetzt, und die Federelemente 42 werden an dem Kontaktträger 41 angeordnet, wie dies im Übergang von Fig. 7A zu Fig. 7B ersichtlich ist. Sodann werden, wie in Fig. 7C dargestellt, die Kontaktelemente 403 mit den daran angeordneten Temperaturüberwachungseinrichtungen 5 an den Befestigungsstellen 411 des Kontaktträgers 41 angeordnet und darüber mechanisch an dem Kontaktträger 41 befestigt.

Die Federelemente 42 sind durch Schenkelfedern gebildet, die jeweils mit einem ersten Schenkel 420 an dem Trägerelement 50 der zugeordneten Temperaturüberwachungseinrichtung 5 abgestützt und über einen zweiten Schenkel 421 an dem Kontaktträger 41 gehalten sind. Über die ersten Federschenkel 420 wirken die Federelemente 42 auf Kopfabschnitte 500 oberseitig der Trägerelemente 50 der Temperaturüberwachungseinrichtungen 5 ein und drücken auf diese Weise die Temperaturüberwachungseinrichtungen 5 in Richtung der Kontaktelemente 403.

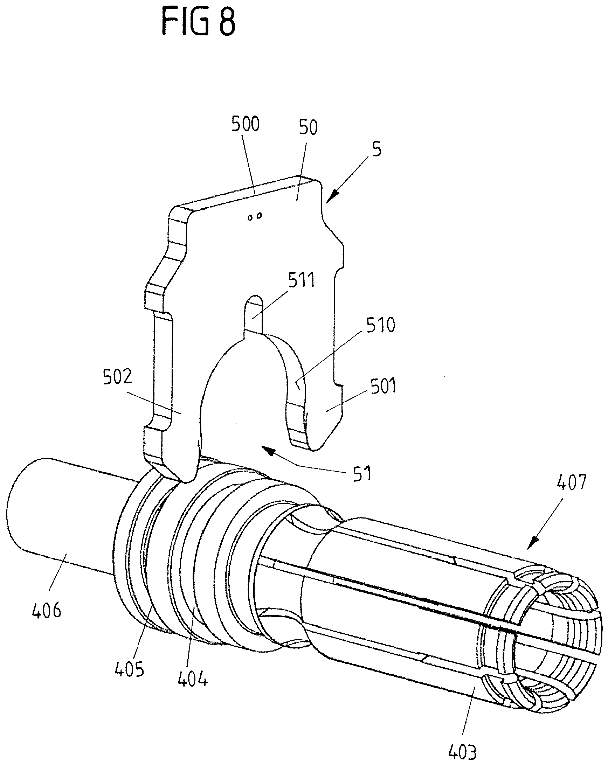

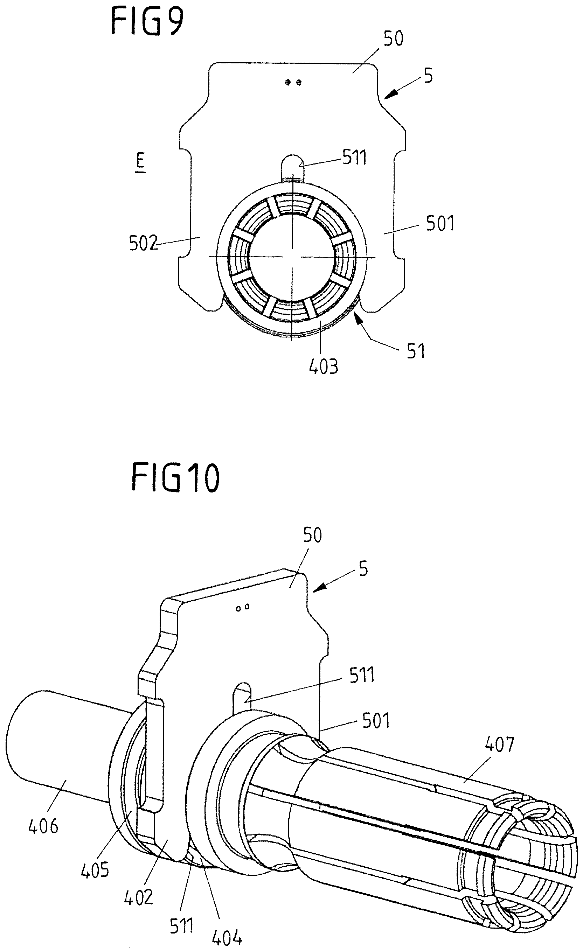

Fig. 8 bis 10 zeigen gesonderte Ansichten eines Kontaktelements 403 mit einer zugeordneten Temperaturüberwachungseinrichtung 5. Die Temperaturüberwachungseinrichtung 5 weist ein Trägerelement 50 auf, das durch eine Leiterplatte gebildet ist und an dem zwei Clipsarme 501, 502 geformt sind, die zwischen sich eine Öffnung 51 mit einem kreisbogenförmigen Randbereich 510 ausbilden. Zum Befestigen der Temperaturüberwachungseinrichtung 5 an dem Kontaktelement 403 wird das Trägerelement 50 mit den Clipsarmen 501, 502 in eine umlaufende Befestigungsnut 404 des in seiner Grundform zylindrischen Kontaktelements 403 eingesteckt, sodass in angesteckter Stellung, wie aus Fig. 9 und 10 ersichtlich, die Temperaturüberwachungseinrichtung 5 über die Clipsarme 501, 502 in clipsender Weise an dem Kontaktelement 403 gehalten ist.

Das Trägerelement 50 weist eine Entlastungsaussparung 511 auf, die von der Öffnung 51 ausgeht und sich in das Trägerelement 50 hinein erstreckt. Die Entlastungsaussparung 511 kann beispielsweise in das Trägerelement 50 eingefräst sein und dient dazu, die Elastizität an den Clipsarmen 501, 502 so einzustellen, dass in angesetzter Stellung die Clipsarme 501, 502 das Kontaktelement 503 umgreifen und dabei in elastisch vorgespannter Weise an dem Kontaktelement 403 anliegen, sodass zum einen ein fester mechanischer Halt und zum anderen eine gute thermische Kopplung zwischen dem Trägerelement 50 und dem Kontaktelement 403 geschaffen ist.

Das Kontaktelement 403 weist eine weitere Befestigungsnut 405 auf, die axial zu der Befestigungsnut 404 versetzt ist und über die das Kontaktelement 403 an der zugeordneten Befestigungsstelle 411 des Kontaktträgers 41 anzuordnen ist. An die Befestigungsnut 405 schließt axial ein Zylinderschaft 406 an, über die eine elektrische Lastleitung an das Kontaktelement 403 angeschlossen werden kann. Am anderen, gegenüberliegenden Ende bildet das Kontaktelement 403 einen Kontaktabschnitt 407 in Form einer durch Kontaktlamellen gebildeten Kontaktbuchse aus, in die ein zugeordneter Kontaktstift eines Gegensteckverbinderteils eingesteckt werden kann.

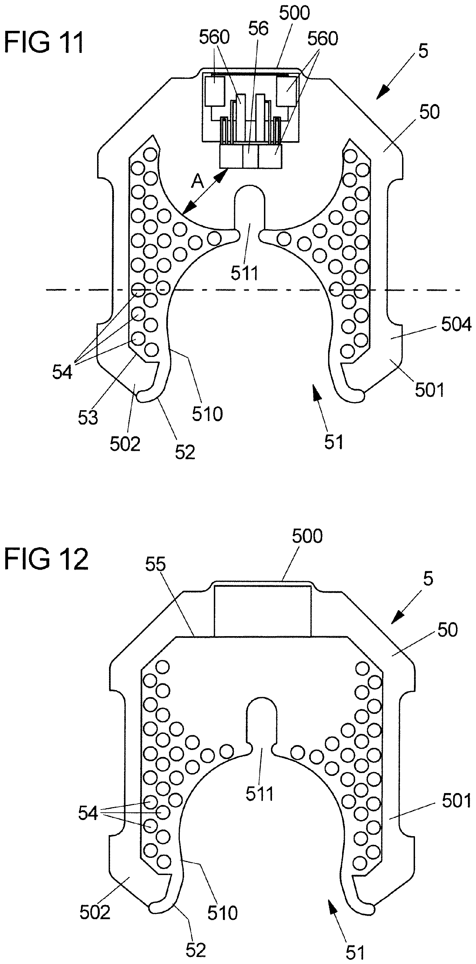

Das Trägerelement 50 der Temperaturüberwachungseinrichtung 5 ist bei einem in Fig. 11 bis 13 dargestellten Ausführungsbeispiel durch eine mehrlagige Leiterplatte ausgebildet, bei der der Randbereich 510 der Öffnung 51 durch eine Metallisierungsschicht 52 überdeckt ist und bei der sich wärmeleitende Metallschichten (z.B. Kupferschichten) auf einer Oberfläche 504 eines Grundkörper 503 und innerhalb des Grundkörpers 503 erstrecken. Eine Sensoreinrichtung 56 ist auf der Oberfläche 504 angeordnet und dient dazu, eine Erwärmung an dem Kontaktelement 403, an das die Temperaturüberwachungseinrichtung 5 angesetzt ist, zu detektieren.

Eine erste wärmeleitende Schicht 53, dargestellt in Fig. 11, erstreckt sich bei diesem Ausführungsbeispiel entlang der Oberfläche 504 des Trägerelements 50. Die wärmeleitende Schicht 53 ist mit der Metallisierungsschicht 52 verbunden und um einen Abstand A von der Sensoreinrichtung 56 beabstandet und darüber elektrisch zu der Sensoreinrichtung 56 isoliert.

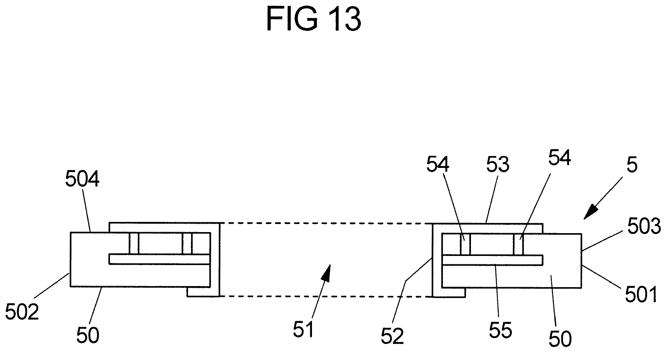

Innerhalb des Grundkörpers 503 erstreckt sich, wie in Fig. 12 dargestellt und aus Fig. 13 ersichtlich, eine zweite wärmeleitende Schicht 55, die über eine Vielzahl von Wärmevias 54 thermisch mit der ersten wärmeleitenden Schicht 53 gekoppelt und zudem mit der Metallisierungsschicht 52 am Randbereich 510 der Öffnung 51 verbunden ist. Die zweite wärmeleitende Schicht 55 erstreckt sich hierbei bis unter die Sensoreinrichtung 56, ist dabei aber über den aus einem elektrisch isolierenden Material (z.B. FR4) gefertigten Grundkörper 503 gegenüber der Sensoreinrichtung 56 elektrisch isoliert.

Erwärmt sich das der Temperaturüberwachungseinrichtung 5 zugeordnete Kontaktelement 403, so wird die an dem Kontaktelement 403 entstehende Wärme über die Metallisierungsschicht 52 und die wärmeleitenden (Metall-)Schichten 53, 55 unmittelbar aufgenommen und führt zu einer gleichförmigen Erwärmung der über die Wärmevias 54 thermisch miteinander gekoppelten wärmeleitenden Schichten 53, 55. Über die in den Grundkörper 503 eingebettete, zweite wärmeleitende Schicht 55 wird die Wärme hierbei bis unter die Sensoreinrichtung 56 transportiert, sodass die Erwärmung unmittelbar an der Sensoreinrichtung 56 detektiert werden kann und somit die Erwärmung an dem Kontaktelement 403 ohne große zeitliche Verzögerung erfasst werden kann.

Die Sensoreinrichtung 56 ist somit zum einen zuverlässig von dem Kontaktelement 403 elektrisch isoliert, insbesondere über den Abstand A von der ersten wärmeleitenden Schicht 53 und über den Grundkörper 503 von der zweiten wärmeleitenden Schicht 55. Zudem ist die Sensoreinrichtung 56 aber räumlich so nahe zu der zweiten wärmeleitenden Schicht 55 angeordnet, dass eine Erwärmung an dem Kontaktelement 403 und damit einhergehend an der zweiten wärmeleitenden Schicht 55 unmittelbar aufgenommen werden kann.

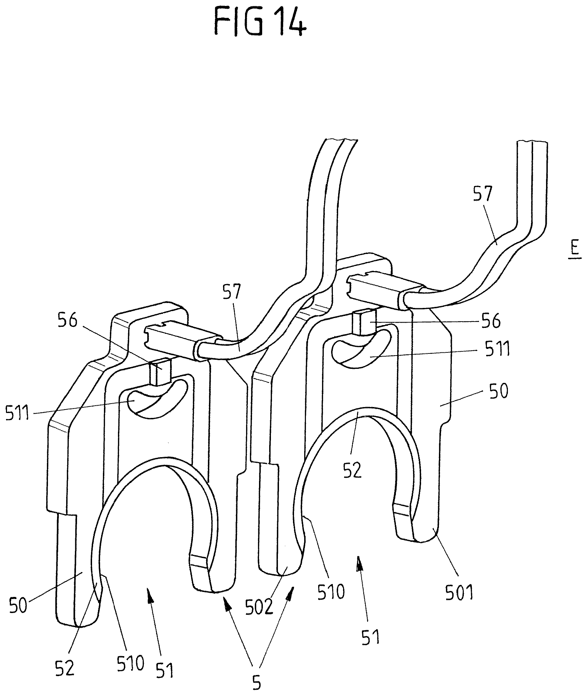

Die Sensoreinrichtung 56 ist mit Metallisierungsabschnitten 560 auf der Oberfläche 504 des Grundkörpers 503 verbunden. Über die Metallisierungsabschnitte 560 können insbesondere Leitungen (siehe hierzu beispielsweise auch Fig. 14) an die Sensoreinrichtung 56 angeschlossen werden.

Bei dem in Fig. 11 bis 13 dargestellten Ausführungsbeispiel der Temperaturüberwachungseinrichtung 5 ist die Entlastungsaussparung 511 ausgehend von der Öffnung 51 in das Trägerelement 50 eingeformt. Bei einem in Fig. 14 dargestellten Ausführungsbeispiel sind Entlastungsaussparungen 511 demgegenüber im Inneren der Trägerelemente 50 der Temperaturüberwachungseinrichtungen 5 angeordnet und somit, betrachtet entlang der Ebene E, von dem Trägerelement 50 umgeben, sodass sich eine geschlossene Kontur um eine jede Entlastungsaussparung 511 herum ergibt. Zusätzlich zeigt Fig. 14 eine Anschlussleitung 57 an jeder Temperaturüberwachungseinrichtung 5, die zur Übertragung von Sensorsignalen an die Sensoreinrichtung 56 angeschlossen ist.

Ansonsten ist das Ausführungsbeispiel gemäß Fig. 14 im Wesentlichen funktionsgleich zu dem Ausführungsbeispiel gemäß Fig. 11 bis 13, sodass auf die vorangehenden Ausführungen verwiesen werden soll.

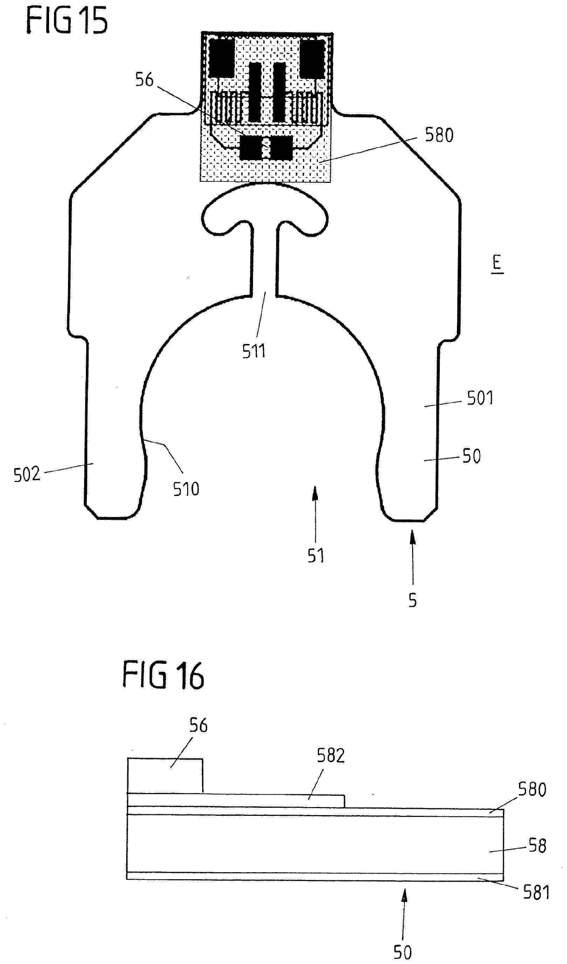

Bei einem in Fig. 15 dargestellten Ausführungsbeispiel ist das Trägerelement 50 der Temperaturüberwachungseinrichtung 5 durch eine sogenannte Metallkernleiterplatte gebildet, die einen zum Beispiel aus Aluminium gefertigten Metallkern 58 umfasst, wie dies schematisch in Fig. 16 dargestellt ist. Der Metallkern 58 ist ganz oder teilweise, auf einer Seite oder auf beiden Seiten, von isolierenden Schichten 580, 581 überdeckt, sodass der Metallkern 58 insbesondere elektrisch gegenüber einer auf dem Trägerelement 50 angeordneten Sensoreinrichtung 56 isoliert ist. Über eine elektrisch leitende (Metall-) Schicht 582 kann die Sensoreinrichtung 56 hierbei zum Beispiel mit Leitungen und darüber mit einer Steuereinrichtung verbunden sein.

Bei diesem Ausführungsbeispiel ist das Trägerelement 50 unmittelbar über den Metallkern 58 mit dem Kontaktelement 403 kontaktiert und somit thermisch gekoppelt. Über den (gut wärmeleitfähigen) Metallkern 58 wird die Wärme unmittelbar unter die Sensoreinrichtung 56 geleitet, sodass eine Erwärmung ohne große zeitliche Verzögerung an der Sensoreinrichtung 56 erfasst werden kann.

Die Clipsarme 501, 502 sind bei diesem Ausführungsbeispiel durch die Metallkernleiterplatte geformt. Eine Entlastungsaussparung 511 erstreckt sich ausgehend von der Öffnung 51 (betrachtet in der Ebene E) in die Metallkernleiterplatte hinein.

Der der Erfindung zugrunde liegende Gedanke ist nicht auf die vorangehend geschilderten Ausführungsbeispiele beschränkt, sondern lässt sich in ähnlicher Weise auch bei gänzlich anders gearteten Ausführungsformen verwirklichen.

Grundsätzlich ist ein Steckverbinderteil der hier beschriebenen Art nicht nur als Ladestecker oder Ladebuchse bei einer Ladeeinrichtung zum Aufladen eines Elektrofahrzeugs verwendbar, sondern kann in vielfältiger Weise an ganz unterschiedlichen Einrichtungen überall dort, wo eine Überwachung einer Erwärmung an einem Kontaktelement erforderlich ist, zum Einsatz kommen.

Ein Steckverbinderteil der hier beschriebenen Art kann grundsätzlich ein oder mehrere Kontaktelemente aufweisen. Hierbei können ein oder mehrere Sensoreinrichtungen zum Überwachen einer Erwärmung verwendet werden.

### Bezugszeichenliste

- 1: Fahrzeug
- 2: Ladestation
- 3: Ladekabel
- 30, 31: Ladestecker
- 4: Steckverbinderteil
- 40: Gehäuseteil
- 400, 401: Steckabschnitt
- 402, 403: Kontaktelement
- 404: Nut
- 405: Nut
- 406: Zylinderschaft
- 407: Kontaktabschnitt
- 41: Kontaktträger
- 410, 411: Befestigungsstellen
- 42: Federelement
- 420, 421: Schenkel
- 5: Temperaturüberwachungseinrichtung
- 50: Trägerelement (Leiterplatte)
- 500: Kopfabschnitt
- 501, 502: Clipsarm
- 503: Grundkörper
- 504: Oberfläche
- 51: Aufnahmeöffnung
- 510: Randabschnitt
- 511: Entlastungsaussparung
- 52: Metallisierungsschicht
- 53: Leitende Schicht
- 54: Wärmevia
- 55: Leitende Schicht
- 56: Temperatursensor
- 560: Metallisierungsabschnitte
- 57: Anschlussleitung
- 58: Metallkern
- 580, 581: Isolierende Schicht
- 582: Leitende Schicht
- A: Abstand
- E: Ebene

## Patentansprüche

1. Steckverbinderteil (4) zum Verbinden mit einem Gegensteckverbinderteil (30, 31), mit einem Gehäuseteil (40), einem an dem Gehäuseteil (40) angeordneten elektrischen Kontaktelement (403) zum Herstellen eines elektrischen Kontakts mit dem Gegensteckverbinderteil (30, 31) und einer Temperaturüberwachungseinrichtung (5) mit einer Sensoreinrichtung (56) zum Detektieren einer Erwärmung an dem Kontaktelement (403), **dadurch gekennzeichnet, dass** die Temperaturüberwachungseinrichtung (5) ein flächig entlang einer Ebene (E) erstrecktes Trägerelement (50) aufweist, an dem die Sensoreinrichtung (56) angeordnet ist und das zwei Clipsarme (501, 502) aufweist, über die das Trägerelement (50) auf das Kontaktelement (403) aufgeclipst ist.

2. Steckverbinderteil (4) nach Anspruch 1, **dadurch gekennzeichnet, dass** die Clipsarme (501, 502) einstückig mit dem Trägerelement (50) ausgebildet sind.

3. Steckverbinderteil (4) nach Anspruch 1 oder 2, **dadurch gekennzeichnet, dass** die Clipsarme (501, 502) zwischen sich eine Öffnung (51) ausbilden, die einen Randbereich (510) aufweist, der entlang eines Kreisbogens erstreckt ist und das Kontaktelement (403) umgreift.

4. Steckverbinderteil (4) nach Anspruch 3, **dadurch gekennzeichnet, dass** der Randbereich (510) zumindest teilweise durch eine Metallisierungsschicht (52) bedeckt ist.

5. Steckverbinderteil (4) nach Anspruch 4, **dadurch gekennzeichnet, dass** das Trägerelement (50) einen aus einem elektrisch isolierenden Material gefertigten Grundkörper (503) und zumindest eine elektrisch leitfähige, mit der Metallisierungsschicht (52) kontaktierte, wärmeleitende Schicht (53, 55) aufweist.

6. Steckverbinderteil (4) nach Anspruch 5, **dadurch gekennzeichnet, dass** eine erste wärmeleitende Schicht (53) an einer Oberfläche (504) des Grundkörpers (503) angeordnet und eine zweite wärmeleitende Schicht (53, 55) in den Grundkörper (503) eingebettet ist.

7. Steckverbinderteil (4) nach Anspruch 6, **dadurch gekennzeichnet, dass** die erste wärmeleitende Schicht (53) und die zweie wärmeleitende Schicht über Wärmevias (54) thermisch miteinander verbunden sind.

8. Steckverbinderteil (4) nach Anspruch 6 oder 7, **dadurch gekennzeichnet, dass** die an der Oberfläche (504) angeordnete, erste wärmeleitende Schicht (53) um einen Abstand (A) zu der ebenfalls an der Oberfläche (504) des Grundkörpers (50) angeordneten Sensoreinrichtung (56) beabstandet ist.

9. Steckverbinderteil (4) nach einem der Ansprüche 6 bis 8, **dadurch gekennzeichnet, dass** die zweite wärmeleitende Schicht (55) sich in dem Grundkörper (503) bis unter die Sensoreinrichtung (56) erstreckt.

10. Steckverbinderteil (4) nach einem der Ansprüche 1 bis 3, **dadurch gekennzeichnet, dass** das Trägerelement (50) einen Metallkern (58) und zumindest eine den Metallkern (58) zumindest teilweise überdeckende, elektrisch isolierende Schicht aufweist.

11. Steckverbinderteil (4) nach einem der vorangehenden Ansprüche, **dadurch gekennzeichnet, dass** das Trägerelement (50) zumindest eine Entlastungsaussparung (511) zur Bereitstellung einer Elastizität an den Clipsarmen (501, 502) aufweist.

12. Steckverbinderteil (4) nach Anspruch 11, **dadurch gekennzeichnet, dass** die Entlastungsaussparung (511) sich ausgehend von der Öffnung (51) in das Trägerelement (50) hinein erstreckt.

13. Steckverbinderteil (4) nach einem der vorangehenden Ansprüche, **gekennzeichnet durch** einen Kontaktträger (41), der an dem Gehäuseteil (40) angeordnet ist und an dem das Kontaktelement (403) zusammen mit der daran angeordneten Temperaturüberwachungseinrichtung (5) gehalten ist.

14. Steckverbinderteil (4) nach Anspruch 13, **dadurch gekennzeichnet, dass** das Trägerelement (50) über ein Federelement (42) elastisch an dem Kontaktträger (41) abgestützt ist.

15. Steckverbinderteil (4) nach Anspruch 14, **dadurch gekennzeichnet, dass** das Federelement (42) einen an dem Trägerelement (50) abgestützten, ersten Schenkel (420) und einen an dem Kontaktträger (41) abgestützten, zweiten Schenkel (421) aufweist.

16. Steckverbinderteil (4) nach Anspruch 14 oder 15, **dadurch gekennzeichnet, dass** das Federelement (42) eine elastische Vorspannung auf das Trägerelement (50) in der Ebene (E) des Trägerelements (50) ausübt.

17. Steckverbinderteil (4) nach einem der vorangehenden Ansprüche, **gekennzeichnet durch** mehrere Kontaktelemente (403), an denen jeweils eine gesonderte Temperaturüberwachungseinrichtung (5) angeordnet ist.

## Claims

1. Plug-in connector part (4) for connection to a mating plug-in connector part (30, 31), comprising a housing part (40), an electrical contact element (403), which is arranged on the housing part (40), for establishing electrical contact with the mating plug-in connector part (30, 31) and a temperature monitoring device (5) comprising a sensor device (56) for detecting heating at the contact element (403), **characterized in that** the temperature monitoring device (5) has a carrier element (50) which extends in a planar manner along a plane (E), on which the sensor device (56) is arranged and which has two clip arms (501, 502) by means of which the carrier element (50) is clipped onto the contact element (403).

2. Plug-in connector part (4) according to Claim 1, **characterized in that** the clip arms (501, 502) are formed in one piece with the carrier element (50).

3. Plug-in connector part (4) according to Claim 1 or 2, **characterized in that** the clip arms (501, 502) form an opening (51) between them, which opening has an edge region (510) which extends along an arc of a circle and engages around the contact element (403).

4. Plug-in connector part (4) according to Claim 3, **characterized in that** the edge region (510) is at least partially covered by a metallization layer (52).

5. Plug-in connector part (4) according to Claim 4, **characterized in that** the carrier element (50) has a main body (503), which is manufactured from an electrically insulating material, and at least one electrically conductive, heat-conducting layer (53, 55) which is contact-connected to the metallization layer (52).

6. Plug-in connector part (4) according to Claim 5, **characterized in that** a first heat-conducting layer (53) is arranged on a surface (504) of the main body (503) and a second heat-conducting layer (53, 55) is embedded into the main body (503).

7. Plug-in connector part (4) according to Claim 6, **characterized in that** the first heat-conducting layer (53) and the second heat-conducting layer are thermally connected to one another by means of heat vias (54).

8. Plug-in connector part (4) according to Claim 6 or 7, **characterized in that** the first heat-conducting layer (53) which is arranged on the surface (504) is spaced apart from the sensor device (56), which is likewise arranged on the surface (504) of the main body (50), by a distance (A).

9. Plug-in connector part (4) according to one of Claims 6 to 8, **characterized in that** the second heat-conducting layer (55) extends in the main body (503) until it is below the sensor device (56).

10. Plug-in connector part (4) according to one of Claims 1 to 3, **characterized in that** the carrier element (50) has a metal core (58) and at least one electrically insulating layer which at least partially overlaps the metal core (58).

11. Plug-in connector part (4) according to one of the preceding claims, **characterized in that** the carrier element (50) has at least one load-relief cutout (511) for providing the clip arms (501, 502) with a degree of elasticity.

12. Plug-in connector part (4) according to Claim 11, **characterized in that** the load-relief cutout (511) extends into the carrier element (50) starting from the opening (51).

13. Plug-in connector part (4) according to one of the preceding claims, **characterized by** a contact carrier (41) which is arranged on the housing part (40) and on which the contact element (403) is held together with the temperature monitoring device (5) which is arranged on it.

14. Plug-in connector part (4) according to Claim 13, **characterized in that** the carrier element (50) is elastically supported on the contact carrier (41) by means of a spring element (42).

15. Plug-in connector part (4) according to Claim 14, **characterized in that** the spring element (42) has a first limb (420), which is supported on the carrier element (50), and a second limb (421), which is supported on the contact carrier (41).

16. Plug-in connector part (4) according to Claim 14 or 15, **characterized in that** the spring element (42) exerts an elastic preload onto the carrier element (50) in the plane (E) of the carrier element (50).

17. Plug-in connector part (4) according to one of the preceding claims, **characterized by** a plurality of contact elements (403), on each of which a separate temperature monitoring device (5) is arranged.

## Revendications

1. Partie de connecteur à enfichage (4) destinée à être reliée à une partie de connecteur à enfichage homologue (30, 31), comprenant une partie de boîtier (40), un élément de contact (403) électrique disposé sur la partie de boîtier (40) et destiné à établir un contact électrique avec la partie de connecteur à enfichage homologue (30, 31) et un dispositif de surveillance de la température (5) comprenant un dispositif capteur (56) destiné à détecter un échauffement au niveau de l'élément de contact (403), **caractérisée** en ce le dispositif de surveillance de la température (5) possède un élément porteur (50) qui s'étend à plat le long d'un plan (E), sur lequel est disposé le dispositif capteur (56) et qui possède deux bras d'enclipsage (501, 502) par le biais desquels l'élément porteur (50) est enclipsé sur l'élément de contact (403).

2. Partie de connecteur à enfichage (4) selon la revendication 1, **caractérisée en ce que** les bras d'enclipsage (501, 502) sont formés d'un seul tenant avec l'élément porteur (50).

3. Partie de connecteur à enfichage (4) selon la revendication 1 ou 2, **caractérisée en ce que** les bras d'enclipsage (501, 502) forment entre eux une ouverture (51) qui possède une zone de bordure (510) qui s'étend le long d'un arc de cercle et enveloppe l'élément de contact (403).

4. Partie de connecteur à enfichage (4) selon la revendication 3, **caractérisée en ce que** la zone de bordure (510) est au moins partiellement recouverte d'une couche de métallisation (52).

5. Partie de connecteur à enfichage (4) selon la revendication 4, **caractérisée en ce que** l'élément porteur (50) possède un corps de base (503) fabriqué à partir d'un matériau électriquement isolant et au moins une couche (53, 55) thermoconductrice, électriquement conductrice et en contact avec la couche de métallisation (52) .

6. Partie de connecteur à enfichage (4) selon la revendication 5, **caractérisée en ce qu'**une première couche thermoconductrice (53) est disposée sur une surface (504) du corps de base (503) et une deuxième couche thermoconductrice (53, 55) est enrobée dans le corps de base (503).

7. Partie de connecteur à enfichage (4) selon la revendication 6, **caractérisée en ce que** la première couche thermoconductrice (53) et la deuxième couche thermoconductrice sont reliées thermiquement entre elles par le biais de trous de liaison thermiques (54).

8. Partie de connecteur à enfichage (4) selon la revendication 6 ou 7, **caractérisée en ce que** la première couche thermoconductrice (53) disposée sur la surface (504) est espacée d'un écart (A) du dispositif capteur (56) lui aussi disposé sur la surface (504) du corps de base (50).

9. Partie de connecteur à enfichage (4) selon l'une des revendications 6 à 8, **caractérisée en ce que** la deuxième couche thermoconductrice (55) s'étend dans le corps de base (503) jusqu'au-dessous du dispositif capteur (56).

10. Partie de connecteur à enfichage (4) selon l'une des revendications 1 à 3, **caractérisée en ce que** l'élément porteur (50) possède un noyau métallique (58) et au moins une couche électriquement isolante qui recouvre au moins partiellement le noyau métallique (58).

11. Partie de connecteur à enfichage (4) selon l'une des revendications précédentes, **caractérisée en ce que** l'élément porteur (50) possède au moins un creux de soulagement (511) destiné à fournir une élasticité aux bras d'enclipsage (501, 502).

12. Partie de connecteur à enfichage (4) selon la revendication 11, **caractérisée en ce que** le creux de soulagement (511) s'étend à l'intérieur de l'élément porteur (50) à partir de l'ouverture (51).

13. Partie de connecteur à enfichage (4) selon l'une des revendications précédentes, **caractérisée par** un porte-contact (41) qui est disposé au niveau de la partie de boîtier (40) et auquel est maintenu l'élément de contact (403) conjointement avec le dispositif de surveillance de la température (5) disposé sur celui-ci.

14. Partie de connecteur à enfichage (4) selon la revendication 13, **caractérisée en ce que** l'élément porteur (50) est en appui élastiquement contre le porte-contact (41) par le biais d'un élément ressort (42).

15. Partie de connecteur à enfichage (4) selon la revendication 14, **caractérisée en ce que** l'élément ressort (42) possède une première branche (420) en appui contre l'élément porteur (50) et une deuxième branche (421) en appui contre le porte-contact (41).

16. Partie de connecteur à enfichage (4) selon la revendication 14 ou 15, **caractérisée en ce que** l'élément ressort (42) exerce une précontrainte élastique sur l'élément porteur (50) dans le plan (E) de l'élément porteur (50).

17. Partie de connecteur à enfichage (4) selon l'une des revendications précédentes, **caractérisée par** plusieurs éléments de contact (403) au niveau desquels est respectivement disposé un dispositif de surveillance de la température (5) distinct.
